**Europäisches Patentamt**

**European Patent Office**

**Office européen des brevets**

(19)

(11) Veröffentlichungsnummer : **0 348 386 B1**

(12) # EUROPÄISCHE PATENTSCHRIFT

(45) Veröffentlichungstag der Patentschrift :
**05.06.91 Patentblatt 91/23**

(51) Int. Cl.$^5$ : **G01V 3/02**

(21) Anmeldenummer : **87902018.8**

(22) Anmeldetag : **31.12.86**

(86) Internationale Anmeldenummer :
**PCT/EP86/00784**

(87) Internationale Veröffentlichungsnummer :
**WO 88/05172 14.07.88 Gazette 88/15**

(54) **STRUKTURGEOLOGISCH GEEICHTES GEOELEKTRIKVERFAHREN ZUR BESTIMMUNG HYDRAULISCHER KENNWERTE.**

(43) Veröffentlichungstag der Anmeldung :
**03.01.90 Patentblatt 90/01**

(45) Bekanntmachung des Hinweises auf die Patenterteilung :
**05.06.91 Patentblatt 91/23**

(84) Benannte Vertragsstaaten :
**DE FR GB**

(56) Entgegenhaltungen :
**GB-A- 1 102 740**
**US-A- 1 719 786**
**US-A- 2 796 235**

(73) Patentinhaber : **KAUS, Arnim**
**Thüringer Str. 34**
**W-6050 Offenbach/Main (DE)**
Patentinhaber : **KOPP, Thomas**
**Seestr. 9**
**W-6050 Offenbach/Main (DE)**

(72) Erfinder : **KAUS, Arnim**
**Thüringer Str. 34**
**W-6050 Offenbach/Main (DE)**
Erfinder : **KOPP, Thomas**
**Seestr. 9**
**W-6050 Offenbach/Main (DE)**

(74) Vertreter : **Kodron, Rudolf S., Dipl.-Ing.**
**Adam-Karrillon-Strasse 30**
**W-6500 Mainz (DE)**

EP 0 348 386 B1

Jouve, 18, rue Saint-Denis, 75001 PARIS

## Beschreibung

Die Erfindung bezieht sich auf ein geoelektrisches Verfahren zur Bestimmung von schichtspezifischen hydraulischen Kennwerten anisotroper natürlicher oder künstlicher Festkörper, deren Hohlräume entweder ausschließlich mit elektrisch gut leitenden oder ausschließlich mit elektrisch schlecht leitenden Materialien erfüllt sind. Sie ist durch den Patentanspruch 1 gekennzeichnet.

Die bisher bekannten geoelektrischen Verfahren können schichtspezifische felshydraulische Kennwerte nicht ausreichend ermitteln (HABBERJAM, G. M. : Geophysical Prospecting "Apparent resistivity, anisotropie and strike measurements" 23, 211-247, 1975 ; BENDER, F. (1985) : Angewandte Geowissenschaften, Bd. 2, Kap 4.1 ; BENDER, F. (1984) : Angewandte Geowissenschaften, Bd. 3, S. 227-230). Die bekannten hydrogeologischen Verfahren zur Bestimmung hydraulischer Kennwerte sind keine geoelektrischen Verfahren und nur über Bohrungen anwendbar. Dazu zählen Pumpversuche, Wasserdruckprüfungen, Auffüllversuche, Markierungsversuche und das Einschwingverfahren (HEITFELD, K. H. (1965) : Hydro- und baugeologische Untersuchungen über die Durchlässigkeit des Untergrundes an Talsperren des Sauerlandes. Geol. Mitt., 5 (1/2) : 1-210, Aachen, S. 22-32 ; KRAUSS, I. (1977) : Das Einschwingverfahren – Transmissivitätsbestimmung ohne Pumpversuche. Gas und Wasserfach Wasser Abwasser, 118, 9 : 407-410, München (Oldenbourg)). Die Erfindung, wie sie in Patentanspruch 1 gekennzeichnet ist, erfüllt die Aufgabe der Bestimmung schichtspezifischer hydraulischer Kennwerte von anisotropen Festkörpern, die eine ausschließlich elektrisch gut leitende oder eine ausschließlich elektrisch schlecht leitende Hohlraumfüllung aufweisen.

Solche Festkörper können z.B. Fugen-, Karst- oder Porenhohlräume enthalten. Hierzu gehören geklüftete und/ oder verkarstete Gebirgsvolumina, poröse und kavernöse Gesteine, natürliche und künstliche Lockergesteinskörper, in den Fels oder in Lockergesteine eingebrachte Dichtungsschirme, künstliche gefugte, poröse oder kavernöse Festgesteinskörper, Mülldeponien u.ä.. Die hydraulischen Kennwerte sind die Hauptdurchlässigkeit (Eigenwert und Richtung) und die Fugenschar-Durchlässigkeit von flüssigkeits- oder gaserfüllten Gebirgen oder Baukörpern, der Fugenschar- Hohlraumanteil und Hohlraumanteil von gefugten-, verkarsteten-, gestörten- und/ oder kavernösen Gebirgs- oder Baukörpern, deren Hohlräume flüssigkeits-, feststoff- oder gaserfüllt sind.

Sie werden erfindungsgemäß bestimmt über eine Sternsondierung zur Ermittlung der spezifischen Widerstandsvektoren $\rho$, $\rho_{max}$ und $\rho_{min}$ des Gebirges, die Berechnung der spezifischen Gebirgskörperwiderstände für Flüssigkeiten $\rho_B$ oder Gase $\rho_{BGas}$ und die Koeffizienten a, m und c. Dazu werden mindestens drei lineare geoelektrische Widerstandssondierungen in unterschiedlichen Richtungen von einem Standpunkt ausgeführt und die gewonnenen Sondierungskurven nach einem gemeinsamen Schichtaufbau ausgewertet.

Für die technische Durchführung der Erfindung wird eine geoelektrische Gleichstromapparatur mit Zubehör zur Bestimmung der scheinbaren spezifischen Widerstände $\rho s$ und ein Kompaß oder ein anderes Instrument zur Richtungs- bzw. Winkelmessung benötigt.

Im folgenden wird die Erfindung anhand des prinzipiellen Ausführungsweges und der Zeichnungen beispielhaft erläutert. Es zeigt

Abb. 1 drei geoelektrische Sondierungskurven mit Auswertung in Form dreier Schichtprofile und

Abb. 2 die spezifische Widerstandsanisotropie der dritten Schicht aus Abb. 1 in elliptischer Form.

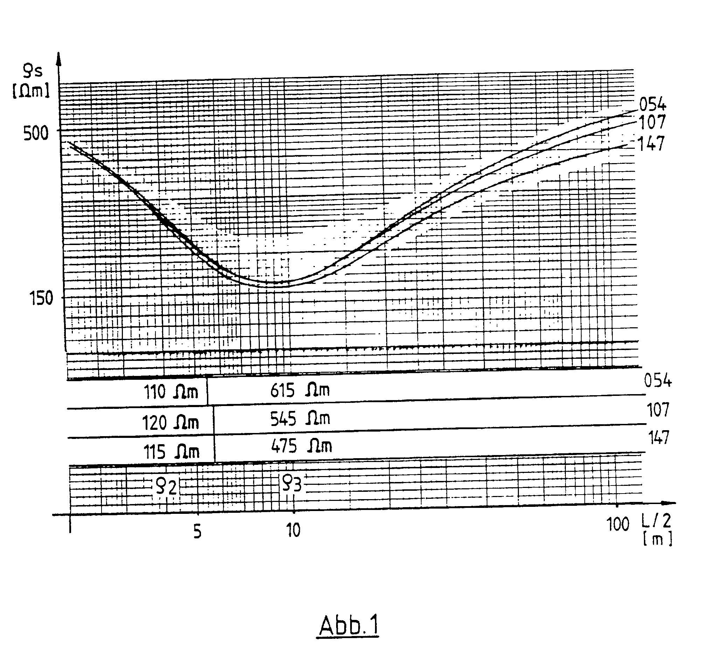

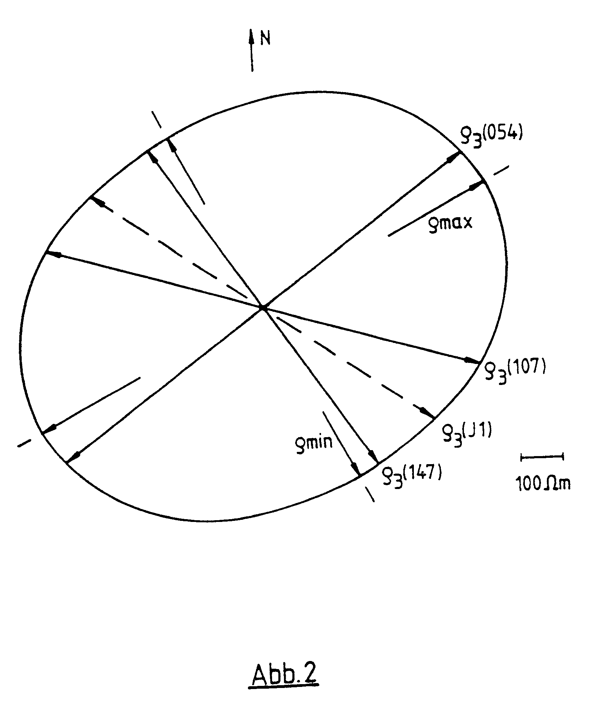

Die erfindungsgemäße Datenermittlung beginnt mit der Durchführung von drei linearen geoelektrischen Widerstandssondierungen zur Ermittlung der kleinsten und größten spezifischen Schichtwiderstände und des spezifischen Gebirgskörperwiderstandes der Schicht des Meßkörpers, wie in Patentanspruch 1 beschrieben. Ausgehend von einem Meßpunkt im Zentrum der Spannungselektroden werden die Sondierungen unterschiedlicher Richtungen in SCHLUMBERGER- Anordnung ausgeführt, im Beispiel von Abb. 1 und Abb. 2 in den Richtungen 054, 107 und 147 (0-180 Grad- Einteilung des Halbkreises der Richtungsrose). Für jede Richtung erhält man eine Sondierungskurve. Die ermittelten scheinbaren spezifischen Widerstände $\rho s$ werden gegen den zugehörigen halben Abstand der Stromelektroden L/2 im doppellogarithmischen Maßstab abgetragen. Die Ermittlung der Schichtprofile der einzelnen Sondierungskurven erfolgt wie bei der herkömmlichen geoelektrischen Auswertung durch den Vergleich mit theoretisch berechneten Modellkurven. Man geht von einem gemeinsamen Schichtaufbau mit Schichtgrenzen parallel zur Meßoberfläche aus. Dieser besteht aus derselben Anzahl von Schichten und annähernd gleichgroßen Schichtmächtigkeiten, jedoch schichtspezifisch und richtungsabhängig unterschiedlichen wahren spezifischen Widerständen ($\rho$-Vektoren). Die Abb. 1 stellt dies dar anhand der drei Schichtprofile. In der dritten Schicht der Abb. 1 sind die folgenden Werte der $\rho$- Vektoren ausgewiesen :

$\rho_3(054) = 615$ $\Omega$m ; $\rho_3(107) = 545$ $\Omega$m ; $\rho_3(147) = 475$ $\Omega$m.

Durch die maßstabsgerechte Abtragung der $\rho$- Vektoren nach beiden Seiten läßt sich gemäß Patentanspruch 2 eine Ellipse konstruieren, mit deren Hilfe der größte und der kleinste spezifische Schichtwiderstand ermittelt werden kann. In der Abb. 2 sind dies $\rho_{min} = 470$ $\Omega$min Richtung 153 und $\rho_{max} = 620$ $\Omega$m in Richtung 063. Aus der Ellipse lassen sich grundsätzlich $\rho$- Vektoren in beliebigen Richtungen (Zwischengrößen) abgreifen, im Beispiel der Abb. 2 der Vektor für die J1- Fugenschar in ihrer Streichrichtung 126 mit $\rho_3(J1) = 500\ \Omega m$.

Laut Patentanspruch 1 erhält man die spezifischen Gebirgskörperwiderstände der Richtungen durch Einsetzen der Werte von $\rho$, $\rho_{max}$ und $\rho_{min}$ in die Gleichungen (1) bzw. (2) :

$$\rho_B \quad = \quad \rho \quad + \quad \frac{\rho_{max} \; - \; \rho}{\rho_{max} \; - \; \rho_{min}} \; \cdot \; \frac{\rho_{max}}{\rho_{min}} \; \cdot \; (\Omega m) \qquad [\Omega m] \qquad (1)$$

$$\rho_{BGas} \quad = \quad \rho \quad - \quad \frac{\rho_{max} \; - \; \rho}{\rho_{max} \; - \; \rho_{min}} \; \cdot \; \frac{\rho_{max}}{\rho_{min}} \; \cdot \; (\Omega m) \qquad [\Omega m] \qquad (2)$$

Die Bestimmung der Hauptdurchlässigkeit $K_T$ einer Schicht nach Richtung und Eigenwert erfolgt nach Patentanspruch 1 aus den Formeln (3) und (4) :

$$K_{(T,FS)} \quad = \quad \sqrt[m]{\frac{\rho_W\,(\rho_B/\rho \; - \; 1)}{\rho_B \; - \; \rho_W}} \; \cdot a \quad \cdot v_E/v \; \cdot s \qquad [m/s] \qquad (3)$$

$$K_{(T,FS)} \quad = \quad \sqrt[m]{\frac{\rho \; - \; \rho_{BGas}}{\rho}} \; \cdot a \quad \cdot v_E/v \; \cdot s \qquad [m/s] \qquad (4)$$

a, m − Koeffizienten :
a = 60 $(m/s)^{0,328}$, m = 0,328
$\rho$ − Wert des spezifischen Widerstandsvektors einer Schicht
$\rho_B$, $\rho_{BGas}$ − Wert des spez. Gebirgskörperwiderstandsvektors einer Schicht
$\rho_W$ − spezifischer Widerstand des Grundwassers
$v_E$ − kinematische Viskosität ;
bei 10°C Wasser : $1,31 \cdot 10^{-6}$ m²/s
$v$ − kinematische Viskosität
s − Strömungsfaktor ; für laminare parallele Strömungsverhältnisse ist s = 1
Die Bestimmung der Fugenschar- Durchlässigkeit $K_{Fs}$ einer Schicht erfolgt nach Patentanspruch 1 aus den Formeln (3) und (4).

Die Bestimmung des Fugenschar- Hohlraumanteils einer Schicht geschieht nach Patentanspruch 1 mit den Formeln (5) und (6) :

$$P_{nFS} \quad = \quad c \; \cdot \; \frac{\rho_W\,(\rho_B/\rho \; - \; 1)}{\rho_B \; - \; \rho_W} \qquad [\%] \qquad (5)$$

$$P_{nFS} \quad = \quad c \; \cdot \; \frac{\rho \; - \; \rho_{BGas}}{\rho} \qquad [\%] \qquad (6)$$

mit dem Koeffizient c = 150

Die Bestimmung des Hohlraumanteils einer Schicht erfolgt laut Patentanspruch 1 mit der Formel (7) :

$$P_n = K_T{}^m \cdot 300/a \qquad [\%] \qquad (7)$$

$$a = 60 \ (m/s)^{0,328}, \ m = 0,328.$$

Für Abb. 1 und Abb. 2 werden Hauptdurchlässigkeit, Fugenschar- Durchlässigkeit, Fugenschar- Hohlraumanteil und Hohlraumanteil im folgenden beispielhaft berechnet. Der Meßkörper sei ein mit 10°C Wasser erfülltes Sandstein- Gebirge mit parallelen laminaren Strömungsverhältnissen in der dritten Schicht. Der spezifische Widerstand des Wassers $\rho_w$ beträgt 122,5 Ωm. Nach Formel (1) berechnet sich der spezifische Gebirgskörperwiderstand wie folgt :

$$\rho_B = 470 \ \Omega m + 620/470 \cdot \Omega m = 471,32 \ \Omega m \quad (1)$$

Für die Hauptdurchlässigkeit ergibt sich gemäß Formel (3) :

$$K_T = 0,328 \sqrt{\frac{122,5(471,32/470 - 1)}{471,32 - 122,5}} \cdot 60 \cdot 1 \cdot 1 \ m/s$$

$$= 1,8 \cdot 10^{-4} \ m/s \quad (3)$$

Die Richtung der Hauptdurchlässigkeit entspricht der $\rho_{min}$- Richtung (153).
Der Hohlraumanteil berechnet sich nach Formel (7) :

$$P_n = (1,8 \cdot 10^{-4})^{0,328} \cdot 300/60 \ \% = 0,3\% \quad (7)$$

In Abb. 2 wurde eine Fugenschar J1 mit der Streichrichtung 126 eingezeichnet. In dieser Richtung wird der spezifische Gebirgswiderstand mit $\rho = 500$ Ωm aus der Ellipse abgegriffen und für die Berechnung von $\rho_B$ nach (1), $K_{Fs}$ nach (3) und $P_{nFs}$ nach (5) herangezogen :

$$\rho_B = 500 \ \Omega m + \frac{620-500}{620-470} \cdot \frac{620}{470} \ \Omega m = 501,06 \ \Omega m \quad (1)$$

$$K_{Fs} = 0,328 \sqrt{\frac{122,5(501,06/500 - 1)}{501,06 - 122,5}} \cdot 60 \cdot 1 \cdot 1 \ m/s$$

$$= 5,9 \cdot 10^{-5} \ m/s \quad (3)$$

$$P_{nFS} = 150 \cdot \frac{122,5(501,06/500 - 1)}{501,06 - 122,5} \ \% = 0,1 \ \% \quad (6)$$

Praktische Anwendungsbereiche zur gewerblichen Nutzung der Erfindung sind die Grundwassererkundung, der Talsperren- und Tunnelbau (Felsbau), Bauwerkssanierungen, Baugrunderkundungen, Baustoffprüfungen, Kontrolle von Dichtungsschirmen, Mauerwerken und Dämmen, der Umweltschutz (Altlasten), Prospektion auf Erdwärme, Gas und Mineralwässer und die Kohlenwasserstoffexploration.

## Ansprüche

1. Geoelektrisches Verfahren zur Bestimmung von Durchlässigkeiten und Hohlraumanteilen von Gebirgs- und Baukörperschichten, das aufweist

– mindestens drei lineare geoelektrische Widerstandssondierungen, d.h. $\rho$s(L/2) – Sondierungsgraphen, in unterschiedlichen Richtungen von einem Standpunkt aus und den zugehörigen Auswertungen, d.h. Vergleich mit eindimensionalen Modellkurven, mit einem für alle Graphen gemeinsamen Schichtaufbau bestehend aus annähernd gleichgroßen Schichtmächtigkeiten, jedoch schichtspezifisch und richtungsabhängig unterschiedlichen wahren spezifischen Widerständen ($\rho$- Vektoren) ;

– die Bestimmung der größten und kleinsten spezifischen Widerstände, d.h. $\Omega_{max}$- und $\rho_{min}$- Vektoren, einer Schicht durch geeignete Extrapolationsverfahren aus den $\rho$- Vektoren ;

– die Bestimmung von $\rho$- Vektoren beliebiger Richtung als Zwischengrößen der ermittelten spezifischen Widerstandsanisotropie

– Bestimmen des spezifischen Gebirgskörperwiderstandes $\rho_B$ für grundwassererfüllte Gebirgs- und Baukörperschichten mit Formel (1) durch Einsetzen der Werte von $\rho$, $\rho_{max}$ und $\rho_{min}$, nach

$$\rho_B = \rho + \frac{\rho_{max} - \rho}{\rho_{max} - \rho_{min}} \cdot \frac{\rho_{max}}{\rho_{min}} \cdot (\Omega m) \quad [\Omega m] \quad (1)$$

– Bestimmen des spezifischen Gebirgskörperwiderstandes $\rho_{BGas}$ für lufterfüllte Gebirgs- und Baukörperschichten mit Formel (2) durch Einsetzen der Werte von $\rho$, $\rho_{max}$ und $\rho_{min}$, nach

$$\rho_{BGas} = \rho - \frac{\rho_{max} - \rho}{\rho_{max} - \rho_{min}} \cdot \frac{\rho_{max}}{\rho_{min}} \cdot (\Omega m) \quad [\Omega m] \quad (2)$$

– Anwendung von elektrischen Leitfähigkeitsmessungen des Grundwassers im Bereich des Standpunktes zur Bestimmung des spezifischen Widerstandes $\rho_w$ ;

– Bestimmen der Hauptdurchlässigkeit $K_T$

für grundwassererfüllte Gebirgs- und Baukörperschichten mit Formel (3) durch Einsetzen des Wertes von $\rho$ und $\rho_B$ der $\rho_{min}$- Richtung und von $\rho_w$, nach

$$K_{(T,FS)} = \sqrt[m]{\frac{\rho_w (\rho_B / \rho - 1)}{\rho_B - \rho_w} \cdot a} \cdot v_E / v \cdot s \quad [m/s] \quad (3)$$

für lufterfüllte Gebirgs- und Baukörperschichten mit Formel (4) durch Einsetzen des Wertes von $\rho$ und $\rho_{BGas}$ der $\rho_{min}$- Richtung, nach

$$K_{(T,FS)} = \sqrt[m]{\frac{\rho - \rho_{BGas}}{\rho} \cdot a} \cdot v_E / v \cdot s \quad [m/s] \quad (4)$$

$m = 0{,}328$, $a = 60 \ (m/s)^{0{,}328}$,

$v_E$– kinematische Eichviskosität ; bei 10°C Wasser :

$1{,}31 \cdot 10^{-6} \ m^2/s$

$v$ – kinematische Viskosität

$s$ – Strömungsfaktor ; für laminare parallele Strömungsverhältnisse ist $s = 1$

– Bestimmen der Fugenschar- Durchlässigkeiten $K_{Fs}$ für grundwassererfüllte Gebirgs- und Baukörperschichten mit Formel (3) durch Einsetzen der Werte von $\rho$ und $\rho_B$ der Fugenschar- Streichrichtung und $\rho_w$ bzw. für lufterfüllte Gebirgs- und Baukörperschichten mit Formel (4) durch Einsetzen der Werte von $\rho$ und $\rho_{BGas}$ der Fugenschar- Streichrichtung.

– Bestimmen des Fugenschar- Hohlraumanteils $P_{nFS}$

für grundwassererfüllte Gebirgs- und Baukörperschichten mit Formel (5) durch Einsetzen der Werte von

$\rho$ und $\rho_B$ der Fugenschar- Streichrichtung und von $\rho_w$, nach

$$P_{nFS} = c \cdot \frac{\rho_w (\rho_B / \rho - 1)}{\rho_B - \rho_w} \quad [\%] \qquad (5)$$

für lufterfüllte Gebirgs- und Baukörperschichten mit Formel (6) durch Einsetzen der Werte von $\rho$ und $\rho_{BGas}$ der Fugenschar- Streichrichtung, nach

$$P_{nFS} = c \cdot \frac{\rho - \rho_{BGas}}{\rho} \quad [\%] \qquad (6)$$

$c = 150$ ;
– Bestimmen des Hohlraumanteils $P_n$ für grundwassererfüllte Gebirgs- und Baukörperschichten mit Formel (7) durch Einsetzen von $K_T$ aus (3), bzw. für lufterfüllte Gebirgs- und Baukörperschichten durch Einsetzen von $K_T$ aus (4), nach

$$P_n = K_T^m \cdot 300/a \quad [\%] \quad (7)$$

$$m = 0{,}328, \ a = 60 \ (m/s)^{0{,}328}.$$

2. Verfahren nach Patentanspruch 1 zur Ermittlung der $\rho_{max}$- und $\rho_{min}$- Vektoren ($\rho$- Anisotropie) einer Gebirgs- oder Baukörperschicht aus einer graphisch konstruierten $\rho$- Ellipse, aufweisend

– die maßstabsgerechte Abtragung der $\rho$- Vektoren nach zwei Seiten von einem gemeinsamen Punkt aus und Konstruktion der Ellipse, die die Endpunkte der $\rho$- Vektoren miteinander verbindet ;
desweiteren das Ablesen der Vektorrichtungen als Winkelbeträge zu geographisch Nord und das maßstabsgerechte Abgreifen der Vektorbeträge von $\rho_{max}$ , $\rho_{min}$ und weiterer, beliebiger $\rho$- Vektoren aus der Ellipse.

## Claims

1. A geoelectrical method for determining permeability and porosity of layers in rock masses or structures comprising :
taking at least three linear electrical resistivity soundings ($\rho s$ (L/2) sounding graphs) in different directions from a point and making associated geoelectrical analysis by comparison with model curves, using a common sequence of layers for the graphs, comprising substantially the same layer thicknesses, but layerspecific and directionally dependent comprising different resistivities ($\rho$-vectors) ;
determining the highest and lowest resistivities, $\rho_{max}$ and $\rho_{min}$ vectors, of a layer by extrapolation from the $\rho$-vectors ;
determining $\rho$-vectors in directions as intermediate values of the resistivity anisotropy ;
determining the resistivity of the rock body $\rho_B$ for groundwater-containing rock layers with formula (1) by inserting the values $\rho$, $\rho_{max}$ and $\rho_{min}$, according to the equation

$$\rho_B = \rho + \frac{\rho_{max} - \rho}{\rho_{max} - \rho_{min}} \cdot \frac{\rho_{max}}{\rho_{min}} \cdot (\Omega m) \quad [\Omega m] \qquad (1)$$

determining the resistivity of the rock body BGas for air/hydrocarbon-containing rock layers with formula (2) by inserting the values of $\rho$, $\rho_{max}$ and $\rho_{min}$, according to the equation

6

$$\rho_{BGas} = \rho - \frac{\rho_{max} - \rho}{\rho_{max} - \rho_{min}} \cdot \frac{\rho_{max}}{\rho_{min}} \cdot (\Omega m) \qquad [\Omega m] \qquad (2)$$

using conductivity measurements of the groundwater in the area of the point to determine the resistivity $_w$; determining the main permeability $K_T$ for groundwater-containing rock layers with formula (3) by inserting the value of and $_B$ of the$_{min}$ direction and of $_w$, according to the equation

$$K_{(T,FS))} = \sqrt[m]{\frac{\rho_W (\rho_B/\rho - 1)}{\rho_B - \rho_W}} \cdot a \cdot \nu E / \nu \cdot s \quad [m/s] \quad (3)$$

and for air/hydrocarbon-containing rock layers with formula (4) by inserting the value of and $_{BGas}$ of the min direction, according to the equation

$$K_{(T,FS)} = \sqrt[m]{\frac{\rho - \rho_{BGas}}{\rho}} \cdot a \cdot \nu E / \nu \cdot s \quad [m/s] \quad (4)$$

m = 0.328, a = 60 (m/s)0.328
vE = kinematic calibrating viscosity ; for water at 10°C : 1 : 31 $10^{-6}$ m²/s
v = kinematic viscosity
s = flow factor ; for laminar parallel flow conditions s = 1
determining the fracture set permeabilities $K_{FS}$ for groundwater-containing rock layers with formula (3) by inserting the values of and $_B$ of the fracture set strike direction $_w$ for air-containing rock strata with formula (4) by inserting the values of and Gas of the fracture set strike direction ; determining the fracture-set porosity $P_{nFS}$ for groundwater-containing rock strata with formula (5) by inserting the values of and $_B$ of the fracture set strike direction and of w, according to the equation

$$P_{nFS} = c \cdot \frac{\rho_W (\rho_B/\rho - 1)}{\rho_B - \rho_W} \quad [\%] \qquad (5)$$

and for air/hydrocarbon-containing rock strata with formula (6) by inserting the values of and BGas of the fracture set strike direction, according to the equation

$$P_{nFS} = c \cdot \frac{\rho - \rho_{BGas}}{\rho} \quad [\%] \qquad (6)$$

c = 150;

and determining the porosity $P_n$ for groundwater-containing rock strata with formula (7) by inserting $K_T$ from formula (3) or for air/hydrocarbon-containing rock strata by inserting $K_T$ from formula (4), according to the equation

$$P_n = K_T^m \cdot 300/a \quad [\%] \quad (7)$$

m = 0.328, a = 60 (m/s)$^{0.328}$.

2. A method acording to claim 1 for determining the $p_{max}$ and the $p_{min}$ vectors (p-anisotropy of a rock layer from a graphically constructed p-ellipse), comprising :

plotting scaled p-vectors on two sides from a common point and constructing an ellipse which joins together the end points of the p-vectors ;

reading the vector directions as angular amounts to geographical north ; and taking scaled vector values to $p_{max}$, $p_{min}$ and additional, desired p-vectors from the ellipse.

## Revendications

1. Procédé géoélectrique pour déterminer les perméabilités et les fractions de vide de couches de roches et de corps souterrains, comprenant :

– au moins trois sondages de résistance géoélectriques linéaires, c'est-à-dire des graphes de sondage $p_s$ (L/2), dans des directions différentes à partir d'un point central et l'exploitation correspondante, c'est-à-dire la comparaison avec des courbes types unidimensionnelles, avec une structure de couche commune pour tous les graphes constituée par des épaisseurs de couches approximativement égales, mais des résistances spécifiques réelles spécifiques aux couches et variant en fonction de la direction (vecteurs p) ;

– la détermination des résistances spécifiques maximale et minimale, c'est-à-dire des vecteurs $p_{max}$ et $p_{min}$, d'une couche par un procédé d'extrapolation approprié à partir des vecteurs p ;

– la détermination de vecteurs p de direction quelconque en tant que grandeurs intermédiaires de l'anisotropie de résistance spécifique obtenue ;

– la détermination de la résistance de corps de terrain spécifique $p_B$ pour des couches de terrains et de corps souterrains remplies d'eau souterraine à l'aide de la formule (1), en utilisant les valeurs de $p$, $p_{max}$ et $p_{min}$, selon :

$$\rho_B = \rho + \frac{\rho_{max} - \rho}{\rho_{max} - \rho_{min}} \cdot \frac{\rho_{max}}{\rho_{min}} \cdot (\Omega m) \quad [\Omega m] \quad (1)$$

– détermination de la résistance de corps de terrain spécifique $p_{Bgaz}$ pour des couches de terrains et de corps souterrains remplies d'air à l'aide de la formule (2) en utilisant les valeurs de $p$, $p_{max}$ et $p_{min}$ selon :

$$\rho_{BGaz.} = \rho - \frac{\rho_{max} - \rho}{\rho_{max} - \rho_{min}} \cdot \frac{\rho_{max}}{\rho_{min}} \cdot (\Omega m) \quad [\Omega m] \quad (2)$$

– application de mesures de conductibilité de l'eau souterraine dans la région du point central pour déterminer la résistance spécifique $p_w$ ;

– détermination de la perméabilité principale $K_T$

pour les couches de terrains et de corps souterrains remplies d'eau souterraine par la formule (3) en utilisant les valeurs de $p$ et $p_B$ dans la direction de $p_{min}$, et de $p_w$, selon :

$$K_{(T,FS)} = \sqrt[m]{\frac{\rho_w \, (\rho_B/\rho - 1)}{\rho_B - \rho_w}} \cdot a \cdot v_t / v \cdot s \quad [m/s] \quad (3)$$

pour des couches de terrains et de corps souterrains remplies d'air par la formule (4), en utilisant la valeur de $p$ et $p_{Bgaz}$ dans la direction de $p_{min}$, selon :

8

$$K_{(T,FS)} = \sqrt[m]{\frac{\rho - \rho_{BGas}}{\rho}} \cdot a \cdot v_E / v \cdot s \quad [m/s] \qquad (4)$$

m = 0,328, a = 60 (m/s) 0,328

$v_E$ viscosité étalon cinématique ;

pour l'eau à 10°C : 1,31. $10^{-6}$ m2/s

$v$ viscosité cinématique

s facteur d'écoulement ; pour des conditions d'écoulement laminaires parallèles s = 1

– détermination des perméabilités par le réseau d'interstices $K_{FS}$ pour des couches de terrains et de corps souterrains remplies d'eau par la formule (3), en utilisant les valeurs de $\rho$ et de $\rho_B$ de la direction d'inclinaison du réseau d'interstices, et de $\rho_w$, et/ou pour des couches de terrains et de corps souterrains remplies d'air par la formule (4) en utilisant les valeurs de $\rho$ et $\rho_{Bgaz}$ de la direction du réseau d'interstices ;

– détermination de la fraction de vides du réseau d'interstices $P_{nFS}$

pour des couches de terrains ou de corps souterrains remplies d'eau souterraine par la formule (5) en utilisant les valeurs de $\rho$ et $\rho_B$ de la direction d'inclinaison du réseau d'interstices, et de $\rho_w$, selon :

$$P_{nFS} = c \cdot \frac{\rho_w (\rho_B / \rho - 1)}{\rho_B - \rho_w} \quad [\%] \qquad (5)$$

pour des couches de terrains et de corps souterrains remplies d'air par la formule (6) en utilisant les valeurs de $\rho$ et de $\rho_{Bgaz}$ de la direction d'inclinaison du réseau d'interstices, selon :

$$P_{nFS} = c \cdot \frac{\rho - \rho_{BGas}}{\rho} \quad [\%] \qquad (6)$$

c = 150;

– détermination de la fraction de vide $P_n$ pour des couches de terrains et de corps souterrains remplies d'eau souterraine par la formule (7) en utilisant $K_T$ tiré de (3), et/ou pour des couches de terrains ou de corps souterrains remplies d'air en utilisant $K_T$ tiré de (4), selon :

$$P_n = K_T^m \cdot 300/a \quad [\%] \quad (7)$$

m = 0,328, a = 60 $(m/s)^{0,328}$.

2. Procédé selon la revendication 1, pour l'obtention des vecteurs $\rho_{max}$ et $\rho_{min}$ (anisotropie de $\rho$) d'une couche de terrains ou de corps souterrains à partir d'une ellipse de $\rho$ construite graphiquement, comprenant :

– le tracé à l'échelle juste des vecteurs $\rho$ vers deux côtés à partir d'un même point et construction de l'ellipse qui relie entre elles les extrémités des vecteurs $\rho$ ;

– puis la lecture des directions des vecteurs en tant que valeurs d'angles par rapport au Nord géographique et la mesure à l'échelle juste des valeurs absolues des vecteurs de $\rho_{max}$, $\rho_{min}$ et de tous les autres vecteurs $\rho$ à partir de l'ellipse.

Abb.1

Abb.2